# EUROPÄISCHE PATENTSCHRIFT

(11) **EP 1 108 128 B1**
(45) Veröffentlichungstag und Bekanntmachung des Hinweises auf die Patenterteilung: **09.10.2002**
(21) Anmeldenummer: 99940098.9
(22) Anmeldetag: 30.07.1999
(51) Int. Cl.: F02B 75/06, B60K 41/00

(54) **ANTRIEBSSYSTEM FÜR EIN KRAFTFAHRZEUG SOWIE VERFAHREN ZUM BETREIBEN EINES ANTRIEBSSYSTEMS**
PROPULSION SYSTEM FOR AN AUTOMOBILE AND METHOD FOR OPERATING A PROPULSION SYSTEM
SYSTEME D'ENTRAINEMENT POUR AUTOMOBILE ET PROCEDE PERMETTANT DE L'ACTIONNER

(30) Priorität: 28.08.1998 DE 19839315
(43) Veröffentlichungstag der Anmeldung: 20.06.2001
(73) Patentinhaber: Continental ISAD Electronic Systems GmbH & Co. oHG, 86899 Landsberg/Lech (DE)
(72) Erfinder: PELS, Thomas, D-77855 Achern (DE)
(74) Vertreter: Lippich, Wolfgang, Dipl.-Pys., Dr.rer.nat.
(86) Internationale Anmeldenummer: EP9905527
(87) Internationale Veröffentlichungsnummer: WO00012885

(56) Entgegenhaltungen:
- WO-A-91/16532
- DE-A- 3 814 484
- DE-A- 19 532 128
- DE-A- 19 648 055

## Beschreibung

Die Erfindung betrifft ein Antriebssystem für ein Kraftfahrzeug mit Verbrennungsmotor, sowie ein Verfahren zum Betreiben eines solchen Antriebssystems.

Heutige Verbrennungsmotoren sind in der Regel mit einer Schubabschaltung ausgerüstet, welche in vorbestimmten Betriebszuständen, insbesondere bei Schubbetrieb, die Kraftstoffeinspritzung unterbindet. Unter Schubbetrieb wird im Zusammenhang mit der Erfindung ein Fahrzustand verstanden, bei welchem der Verbrennungsmotor durch den Schwung des Fahrzeugs angeschoben wird und folglich die Antriebsleistung des Verbrennungsmotors nicht benötigt wird. Ein solcher Zustand tritt z.B. dann ein, wenn der Fahrer während der Fahrt den Fuß vom Gas nimmt. Durch die Aktivierung der Schubabschaltung und das Aussetzen der Einspritzung wird der Verbrennungsmotor abgeschaltet und das Fahrzeug durch die vom Verbrennungsmotor zu verrichtende Kompressionsarbeit abgebremst. Die Deaktivierung der Schubabschaltung erfolgt entweder manuell, z.B. indem der Fahrer wieder Gas gibt, oder automatisch, etwa wenn die Drehzahl des Verbrennungsmotors eine bestimmte Grenze unterschreitet. Daraufhin wird erneut Kraftstoff zugeführt, was zur Folge hat, daß der Verbrennungsmotor wieder Antriebsmoment erzeugt.

Aufgrund der beträchtlichen Kraftstoffeinsparung ist die Schubabschaltung eine wichtige Maßnahme im Sinn des Umweltschutzes und der Schonung knapper Resourcen. Allerdings ist das durch die Schubabschaltung hervorgerufene Ein- und Aussetzen der Motorbremse als nicht optimal anzusehen. Zum einen wird der Fahrkomfort beeinträchtigt, da manche Fahrzeuginsassen das ruckartige Abbremsen als störend empfinden. Zum anderen wird die Fahrsicherheit beeinträchtigt, da der Fahrer z.B. das automatische Deaktivieren der Schubabschaltung und das damit verbundene Wiedereinsetzen der Antriebsleistung nicht genau vorhersehen kann. Schließlich führt das plötzliche Ein- und Ausschalten des Verbrennungsmotors zu abrupten Drehmomentänderungen im Antriebsstrang.

Aus der WO 94/08440 ist ein Vorschlag bekannt, vom Verbrennungsmotor oder von anderen Teilen des Antriebs erzeugte Drehmomentschwankungen, wie Lastwechsel mittels einer elektrischen Maschine zu dämpfen. Die elektrische Maschine ist dort entweder als Antriebsmotor oder als Kupplung ausgebildet und glättet die Drehmomentschwankungen durch Aufbringen eines geeigneten Drehmomentes bzw. eines geeigneten Kupplungsschlupfes. Die Steuerung der elektrischen Maschine erfolgt anhand der Messung von Drehzahl- oder Drehmomentschwankungen im Antriebsstrang.

Desweiteren ist aus der DE 38 14 484 A1 ein Dieselmotor-Aggregat für Lastfahrzeuge bekannt, welches das starke Abbremsen durch Schubabschaltung vermindert, indem die Luftströmung durch den Dieselmotor so gesteuert wird, daß dieser nur wenig oder gar keine Kompressionsarbeit verrichtet. Ein weiterer Lösungsvorschlag der DE 38 14 484 A1 besteht darin, den Dieselmotor für einen seriellen Hybridantrieb zu nutzen, und den Dieselmotor im Schubbetrieb im Leerlauf zu betreiben.

In der DE 195 32 128 A1 sind Start-Stop-Steuerungen erwähnt, bei denen der Verbrennungsmotor bei Schub (z.B. Bergabfahrt) ausgekuppelt und gestoppt wird. Dabei entfällt allerdings schlagartig die Verbrennungsmotor-Bremswirkung. Um dies zu vermeiden wird vorgeschlagen, eine elektrische Maschine als Bremse einzusetzen, welche die entfallende Verbrennungsmotor-Bremswirkung ersetzt.

Ferner ist aus der DE 32 46 230 A1 eine Getriebeanordnung für Kraftfahrzeuge bekannt, welche bei einem Hybridantrieb je nach Antriebsart unterschiedliche Übersetzungen in Kraftflußrichtung bereitstellt.

Der vorliegenden Erfindung liegt die Aufgabe zugrunde, ein weiteres Antriebssystem anzugeben, welches die nachteiligen Auswirkungen der Schubabschaltung vermindert. Dazu gehört auch die Bereitstellung eines entsprechenden Verfahrens.

Bei dem erfindungsgemäßen Antriebssystem kann die elektrische Maschine den Verbrennungsmotor mit einem Drehmoment beaufschlagen und auf diese Weise eine ruckvermindernde Wirkung herbeiführen. Dies ist grundsätzlich z.B. aus der WO 97/08440 bekannt. Der Erfinder der vorliegenden Erfindung hat jedoch erkannt, daß es für eine Verminderung des durch die Schubabschaltung verursachten Beschleunigungsrucks vorteilhaft ist, die elektrische Maschine mit Hilfe des Aktivierungs- und Deaktivierungssignals der Schubabschaltung zu steuern. Auf diese Weise kann die elektrische Maschine dem anstehenden Beschleunigungsruck vorzeitig entgegengewirken, noch bevor dieser für die Fahrzeuginsassen bemerkbar wird oder möglicherweise zu Lastwechselschwingungen führt. Dies im Gegensatz zu dem aus der WO 97/08440 bekannten Vorschlag, bei welchem die elektrische Maschine erst auf die mit der Schubabschaltung einhergehenden Drehmomentsprünge oder die daraus resultierenden Drehzahländerungen reagiert.

Im einzelnen stellt die Erfindung gemäß Anspruch 1 ein Antriebssystem für ein Kraftfahrzeug bereit, welches folgendes umfaßt: einen Verbrennungsmotor; eine Einrichtung zur Schubabschaltung des Verbrennungsmotors; wenigstens eine elektrische Maschine, die mit dem Verbrennungsmotor gekoppelt ist und dazu eingerichtet ist, beim Aktivieren und Deaktivieren der Schubabschaltung den damit einhergehenden Beschleunigungsruck durch Aufbringen eines Drehmomentes zu vermindern, wobei die ruckvermindernde Wirkung der elektrischen Maschine durch ein Aktivierungs- bzw. Deaktivierungssignal der Schubabschaltung gesteuert wird. Ein entsprechendes Verfahren ist in Anspruch 11 angegeben.

In den Unteransprüchen sind vorteilhafte Ausgestaltungen angegeben. Die Ansprüche 2 bis 6 geben an, in welchen Fällen die ruckvermindernde Wirkung der elektrischen Maschine herbeigeführt wird. Die Ansprüche 7 bis 10 betreffen vorteilhafte Ausgestaltungen der elektrischen Maschine.

Die Aktivierung der Schubabschaltung erfolgt insbesondere dann, wenn Schubbetrieb vorliegt, sprich das Fahrzeug die Antriebsleistung des Verbrennungsmotors nicht benötigt. Gemäß Anspruch 2 setzt damit die ruckvermindernde Wirkung der elektrischen Maschine ein, wobei zusätzlich die Bedingung erfüllt sein muß, daß der Verbrennungsmotor eine vorbestimmte Mindestdrehzahl aufweist. Diese gewährleistet, daß der Verbrennungsmotor nur bei einer Drehzahl abgeschaltet wird, bei der er problemlos wieder angeworfen werden kann. Folglich darf die Drehzahl des Verbrennungsmotors bei aktivierter Schubabschaltung nicht unter eine vorbestimmte Mindestdrehzahl sinken. Gemäß Anspruch 3 wird bei Erreichen dieser Drehzahl die Schubabschaltung automatisch deaktiviert; und die elektrische Maschine vermindert den damit einhergehenden Ruck. Im Falle, daß der Fahrer bei aktiver Schubabschaltung das Fahrzeug wieder beschleunigen möchte und "Gas gibt", wird gemäß Anspruch 4 die Schubabschaltung deaktiviert und einem ruckartigen Wiedereinsetzen der Antriebsleistung durch die elektrische Maschine entgegengewirkt. Bei anderen Anwendungen dient die Schubabschaltung nicht der Kraftstoffersparnis, sondern einer Höchstgeschwindigkeits- oder Höchstdrehzahlbegrenzung. Gemäß Ansprüchen 5 und 6 setzt die ruckvermindernde Wirkung dann ein, wenn die Schubabschaltung dadurch aktiviert wird, daß das Fahrzeug die vorbestimmte Höchstgeschwindigkeit oder der Verbrennungsmotor die vorbestimmte Höchstdrehzahl erreicht.

Für alle genannten Ausgestaltungen der Erfindung ist es vorteilhaft, wenn die elektrische Maschine koaxial zur Kurbelwelle des Verbrennungsmotors oder zu einer Antriebswelle angeordnet ist und mit dem Verbrennungsmotor mitdreht (Anspruch 7). Eine einfache Ausgestaltung besteht darin, daß der Stator der elektrischen Maschine drehfest mit einem nicht drehbaren Teil verbunden ist, und ihr Läufer drehfest mit der Kurbelwelle des Verbrennungsmotors gekoppelt ist. Bei anderen Ausgestaltungen kann der Läufer über ein Planetengetriebe mit der Kurbel- oder Antriebswelle gekoppelt sein. Bei weiteren Ausgestaltungen ist die elektrische Maschine als elektromagnetische Kupplung ausgebildet, wobei die ruckvermindernde Wirkung durch einen geeigneten Kupplungsschlupf erzielt wird.

Besonders vorteilhaft ist die Erfindung bei einem Antriebssystem einsetzbar, bei welchem die elektrische Maschine auch als Starter dient (Anspruch 8). Eine solche elektrische Maschine mit Starter-/Generatorfunktion kann mit relativ geringem Aufwand um die erfindungsgemäße Dämpfungsfunktion erweitert werden.

Grundsätzlich kommt für die Erfindung auch jede Art elektrischer Maschine in Frage, sofern sie ein geeignetes Drehmoment aufbringen kann. Gemäß Anspruch 9 ist die elektrische Maschine als wechselrichter-gesteuerte Drehstrommaschine ausgebildet. Der Wechselrichter kann die von der elektrischen Maschine benötigten Ströme und Spannungen mit praktisch frei einstellbarer Amplitude, Phase und Frequenz erzeugen. Besonders vorteilhaft wird der Wechselrichter von einem Gleichspannungszwischenkreis gespeist, welcher ein erhöhtes Spannungsniveau aufweist, wobei ein Energiespeicher auf dem erhöhten Spannungsniveau angeordnet ist und Energie für die Funktion der ruckvermindernden Wirkung zur Verfügung stellt bzw. aufnimmt (Anspruch 10). Die obigen Ausführungen zum Antriebssystem haben vollinhaltlich auch Gültigkeit für das erfindungsgemäße Verfahren gemäß Anspruch 11 und dessen vorteilhafte Ausgestaltungen gemäß Ansprüchen 12 - 16.

Die Erfindung wird nun durch Ausführungsbeispiele sowie die angefügte beispielhafte Zeichnung näher erläutert. In der Zeichnung zeigen:
- Fig. 1: eine Schemadarstellung der wichtigsten Funktionseinheiten eines Antriebssystems;
- Fig. 2: ein schematisches Diagramm einer Überlagerung der Drehmomente des Verbrennungsmotors und der elektrischen Maschine als Funktion der Zeit;
- Fig. 3A, B: ein Diagramm der Drehzahl des Antriebs als Funktion der Zeit und den zugehörigen Drehmomentverlauf;
- Fig. 4: ein Flußdiagramm eines Verfahrens zum Betreiben einer elektrischen Maschine in einem Antriebssystem.

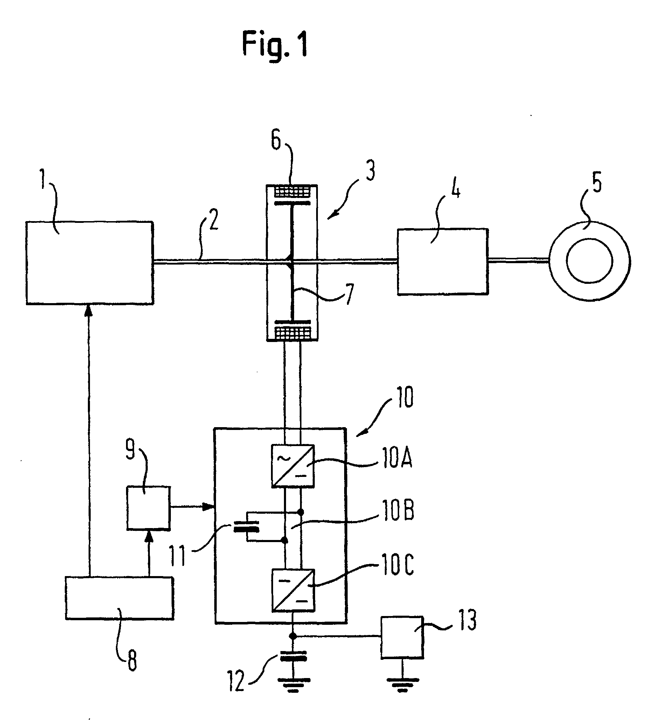

Das in Fig. 1 dargestellte Ausführungsbeispiel zeigt ein Antriebssystem für ein Kraftfahrzeug mit einem Verbrennungsmotor 1, welcher ein Drehmoment über eine Antriebswelle 2 und ein Getriebe 4 auf Antriebsräder 5 des Fahrzeugs abgibt. Bei der Antriebswelle 2 handelt es sich z.B. um die Kurbelwelle des Verbrennungsmotors 1 und einen damit verbundenen Wellenfortsatz. Eine elektrische Maschine 3, hier eine Asynchron-Drehstrommaschine, ist koaxial zur Antriebswelle 2 angeordnet. Ihr Läufer 7 sitzt direkt auf der Antriebswelle 2 und dreht mit dem Verbrennungsmotor 1 mit, während sich der zugehörige Ständer 6, z.B. am Motorgehäuse, gegen Drehung abstützt. Die elektrische Maschine 3 ist so dimensioniert, daß sie als Starter/Generator für den Verbrennungsmotor 1 dienen kann und zusätzlich die ruckvermindernde Wirkung bei den in den Unteransprüchen beschriebenen Betriebszuständen herbeiführen kann. Bei der hier gezeigten Ausführungsform soll dies ohne Über- oder Untersetzung zwischen der elektrischen Maschine 3 und dem Verbrennungsmotor 1 erfolgen, so daß beide permanent mit gleicher Drehzahl zusammenlaufen können. Eine andere, nicht dargestellte Möglichkeit besteht darin, zwischen der Antriebswelle 2 und der elektrischen Maschine 3 ein Getriebe anzuordnen, z.B. ein Planetengetriebe, so daß die elektrische Maschine 3 mit einer anderen Drehzahl als der Verbrennungsmotor 1 dreht. Die elektrische Maschine 3 wird durch einen Wechselrichter 10, z.B. einen Gleichspannungs-Zwischenkreis-Wechselrichter, mit elektrischen Strömen und Spannungen praktisch frei einstellbarer Amplitude, Phase und Frequenz gespeichert. Der Wechselrichter 10 besteht im wesentlichen aus einem Gleichstrom-Wechselstrom-Umrichter 10A, einem Zwischenkreis 10B und einem Gleichspannungs-Wandler lOC. Ein Hochleistungsenergiespeicher 11, z.B. eine Kurzzeitbatterie oder ein Kondensatorspeicher mit hoher Kapazität, liegt im Zwischenkreis 10B und ist so dimensioniert, daß er die für die Funktion der ruckvermindernden Wirkung aufzubringende Energie aufnehmen bzw. zur Verfügung stellen kann. Der Wandler IOC ist mit einem Fahrzeugbordnetz 13 und einem Langzeitspeicher, hier einer Bordnetzbatterie 12, gekoppelt. Das Bordnetz 13 und die Batterie 12 liegen auf einem niedrigen Spannungsniveau, z.B. 12 oder 24 Volt, während der Zwischenkreis 10B mit dem Hochleistungsenergiespeicher 11 auf einer erhöhten Spannung, z.B. 48 Volt oder höher, liegen. Wenn die elektrische Maschine 3 als Generator arbeitet, dient die dabei erzeugte Energie der Aufladung des Hochleistungsspeichers 11, der Niederspannungsbatterie 12 und/oder der Versorgung von Verbrauchern im Zwischenkreis 10B und im Niederspannungsnetz 13. Wird die elektrische Maschine als Motor betrieben, wandelt der Umrichter 10A die von der Hochleistungsbatterie 11 und/oder der Niederspannungsbatterie in den Zwischenkreis 10B abgegebene Gleichspannung in Wechselspannung um. Zur Ruckvermeidung kann die elektrische Maschine 3 vorteilhaft als Motor und als Generator wirken, je nachdem ob der zu dämpfende Ruck von der Aktivierung oder der Deaktivierung der Schubabschaltung herrührt. In beiden Fällen kann die Leistung der elektrischen Maschine 3 so groß sein, daß sie vorteilhafterweise dem auf dem erhöhten Spannungsniveau liegenden Hochleistungsenergiespeicher 11 entnommen bzw. von diesem aufgenommen wird. Es ist aber auch möglich, die elektrische Maschine 3 zur Ruckvermeidung ausschließlich antreibend wirken zu lassen. Bei dem "Deaktvierungsruck" ist es dann aber erforderlich, daß sie ihr antreibendes Drehmoment bereits aufbringt bevor sich das Einschalten der Kraftstoffzufuhr als Beschleunigungsruck auswirkt. Auch bei dieser Betriebsart entnimmt die Maschine 3 die nötige Energie aus dem auf erhöhtem Spannungsniveau liegenden Hochleistungsenergiespeicher 11. Ein Steuergerät 9 steuert den Wechselrichter 10 und darüber die elektrische Maschine 3 und kann so die (unten näher beschriebene) ruckvermindernde Wirkung herbeiführen. Eine Steuereinrichtung 8 zur Schubabschaltung des Verbrennungsmotors 1 bewirkt das Aussetzen und Wiedereinsetzen der Kraftstoffzufuhr, indem sie ein Aktivierungs- bzw. Deaktivierungssignal erzeugt und an das (nicht dargestellte) Motor-Steuergerät sendet. Das Aktivierungs- bzw. Deaktivierungssignal wird auch an das Steuergerät 9 gesendet. Aufgrund dieses Signals steuert das Steuergerät 9 die elektrische Maschine 3 so, daß diese den zur Ruckverminderung gewünschten antreibenden bzw. bremsenden Drehmomentverlauf erzeugt. Der Zeitpunkt der Abschaltung bzw. Einschaltung der Kraftstoffzufuhr kann mit demjenigen des Einsetzens des Maschinenmoments zusammentreffen. Es kann aber auch vorteilhaft sein, einen der Zeitpunkte gegenüber dem anderen zu verzögern. Wenn beispielsweise das Ansprechverhalten des Verbrennungsmotors 1 samt Kraftstoffeinspritzung träger als dasjenige der elektrischen Maschine 3 ist, erfolgt bei Aktivierung bzw. Deaktivierung der Schubabschaltung das Einsetzen des antreibenden bzw. bremsenden Maschinenmoments vorteilhaft etwas verzögert. Bei der oben genannten Betriebsweise mit vor dem "Deaktivierungsruck" aufzubringenden antreibenden Moment wird hingegen der Einschaltzeitpunkt der Kraftstoffeinspritzung verzögert, falls die Trägheit im Ansprechverhalten des Verbrennungsmotors nicht bereits eine ausreichende Verzögerung liefert. Bei anderen, nicht dargestellten Ausführungsformen übernimmt die Steuereinrichtung 8 zusätzlich die Steuerung des Verbrennungsmotors l, und ggf. auch die Funktion des Steuergeräts 9.

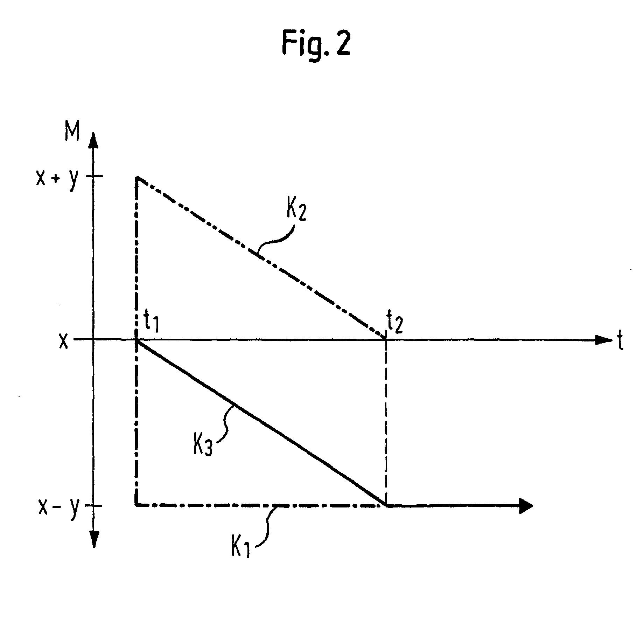

Fig. 2 zeigt beispielhaft, wie der mit einer Aktivierung der Schubabschaltung einhergehende negative Beschleunigungsruck durch die elektrische Maschine 3 vermindert wird. Gezeigt sind die Drehmomentenverläufe (Drehmoment M als Funktion der Zeit t) des Verbrennungsmotors 1 (Kurve K1) und der elektrischen Maschine 3 (Kurve K2) sowie der aus der Überlagerung der beiden Kurven resultierende Drehmomentenverlauf (Kurve K3). Die Kurve K3 zeigt also die tatsächlich auf das Fahrzeug und seine Insassen wirkende Beschleunigung. Aus Gründen der Vereinfachung wird das Bremsmoment des Verbrennungsmotors bei Schubabschaltung als konstant angenommen. Zum Zeitpunkt t1 wird die Schubabschaltung aktiviert und die Kraftstoffzufuhr des Verbrennungsmotors 1 setzt aus (wobei hier trägheitsloses Ansprechen des Verbrennungsmotors unterstellt ist, so daß das Moment der elektrischen Maschine 3 unverzögert einsetzen kann). Der Verbrennungsmotor 1 beaufschlagt daraufhin den Antriebsstrang mit einem negativen Drehmoment, welches aber durch ein Entgegenwirken des Drehmoments der elektrischen Maschine, gesteuert durch das Schubabschaltung-Aktivierungssignal, ausgeglichen wird. Ohne die Wirkung der elektrischen Maschine würde das Fahrzeug gemäß Kurve K1 ruckartig abgebremst werden. So aber wird die Bremswirkung des Verbrennungsmotors 1 gemäß Kurve K3 langsam eingeleitet. Durch entsprechende Veränderung der Kurve 2, also des Drehmomentenverlaufes der elektrischen Maschine 3, kann der Bremsvorgang des Fahrzeug vorteilhaft verändert werden. Anstatt linear zu verlaufen, kann die Kurve K2 z.B. eine Kurve zweiter oder höherer Ordnung sein. Durch die hier gezeigte, stetige Abnahme des Gegenmoments der elektrischen Maschine 3 (Kurve K2) nimmt die auf das Fahrzeug wirkende Bremswirkung gemäß Kurve K3 stetig zu. Zum Zeitpunkt t2 erlischt schließlich die Wirkung der elektrischen Maschine 3 (Kurve K2) und die auf das Fahrzeug wirkende Bremskraft entspricht der des Verbrennungsmotors 1 (Kurve K1 und Kurve K3 sind deckungsgleich). Eine Deaktivierung der Schubabschaltung kann auf entsprechende Weise erfolgen, wobei die Vorzeichen der Momente zu vertauschen sind. In diesem Fall sinkt die Drehzahl des Verbrennungsmotors 1 aufgrund der verzögerten Beschleunigung des Fahrzeugs kurzzeitig weiter ab. Dies kann zur Folge haben, daß bei automatischer Deaktivierung die vorbestimmte Mindestdrehzahl für kurze Zeit unterschritten wird.

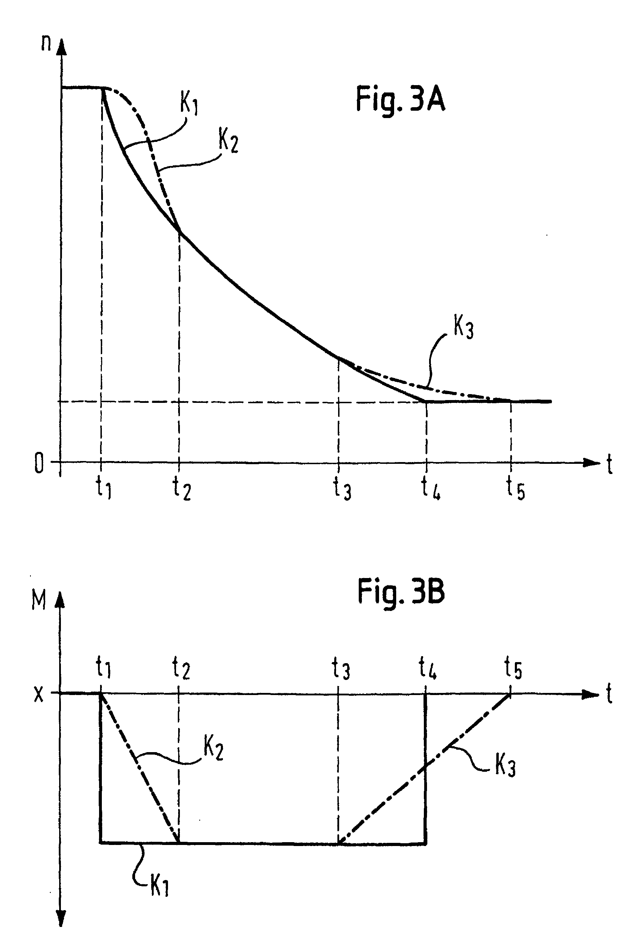

Fig. 3 veranschaulicht die Verhältnisse bei Aktivierung und darauffolgender Deaktivierung der Schubabschaltung, hier in der Ausgestaltung mit verzögertem Einschalten der Kraftstoffzufuhr. Bei der Ausgestaltung wirkt die elektrische Maschine 3 im Zusammenhang mit der Ruckverminderung nurantreibend, so daß ein Unterschreiten der Mindestdrehzahl ausgeschlossen werden kann. Fig. 3A zeigt den Drehzahlverlauf des Antriebs, sprich die Geschwindigkeit des Fahrzeugs als Funktion der Zeit. Fig. 3B zeigt den zugehörigen Drehmomentverlauf, also die Beschleunigung des Fahrzeugs im Verlauf der Zeit. In beiden Diagrammen stellt die Kurve K1 jeweils den Verlauf ohne Eingriff der elektrischen Maschine 3 dar. Die Kurven K2 bzw. K3 demonstrieren die ruckvermindernde Wirkung der Erfindung. Zum Zeitpunkt t1 wird die Schubabschaltung aktiviert und die Kraftstoffzufuhr des Verbrennungsmotors 1 unterbrochen. Der Kurvenverlauf der Kurve K2 kommt nun dadurch zustande, daß ein ruckartiges Abbremsen des Fahrzeugs (gemäß Kurve 1) durch eine geeignete Drehmomentenüberlagerung verhindert wird, wie sie aus Fig. 2 bekannt ist. Das dabei von der elektrischen Maschine 3 aufzubringende Drehmoment wird anhand der zum Zeitpunkt t1 vorliegenden Drehzahl ermittelt. Das Drehmoment der elektrischen Maschine 3 folgt im weiteren zeitlichen Verlauf einer vorbestimmten Kurve und sinkt bis zum Zeitpunkt t2 auf Null ab. Zum Zeitpunkt t3 wird die Schubabschaltung deaktiviert, d.h. die elektrische Maschine 3 wirkt antreibend, es wird aber noch kein Kraftstoff zugeführt. Ohne Wirkung der elektrischen Maschine würde der bis dahin andauernde Bremsvorgang beim Einschalten der Kraftstoffzufuhr abrupt durch die wiedereinsetzende Antriebsleistung des Verbrennungsmotors 1 aufgehoben. Das Einschalten der Kraftstoffzufuhr wird bis zum Zeitpunkt t4 verzögert (Kurve K1). Falls die Trägheit im Ansprechverhalten des Verbrennungsmotors 1 ausreichend groß ist, kann auf eine aktive Verzögerung des Einschaltzeitpunkts der Kraftstoffzufuhr verzichtet werden. In diesem Fall wird die Kraftstoffzufuhr bereits im Zeitpunkt t3 eingeschaltet, eine Auswirkung in Form des Beschleunigungsrucks zeigt sich dann erst im Zeitpunkt t4. Die elektrische Maschine 3 leitet das Wiedereinsetzen des Antriebsmoments des Verbrennungsmotors 1 gemäß Kurve K3 langsam ein. Drehmomenthöhe und
-verlauf der elektrischen Maschine werden der zum Zeitpunkt t3 vorliegenden Drehzahl angepaßt. Analog zum oben beschriebenen Fall werden die Drehmomente des Verbrennungsmotors 1 und der elektrischen Maschine 3 derart überlagert, daß die in der Fig. 3 gezeigten Kurven K3 resultieren. Zum Zeitpunkt t5 erlischt die Wirkung der elektrischen Maschine 3, d.h. ihr Drehmoment ist auf Null abgesunken.

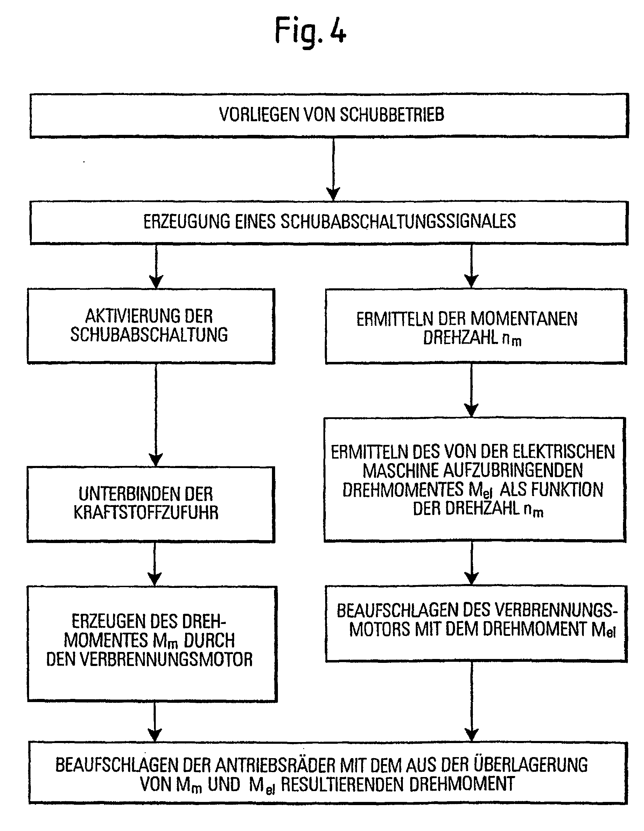

Fig. 4 zeigt schließlich ein Beispiel für das erfindungsgemäße Verfahren bei Schubabschaltung. Zunächst wird ein Schubabschaltungssignal durch einen vorbestimmten Betriebszustand, hier das Vorliegen von Schubbetrieb, erzeugt. Daraufhin laufen zwei Ereignisketten parallel ab:
1. Die Schubabschaltung wird aktiviert, wodurch die Kraftstoffzufuhr des Verbrennungsmotors unterbunden wird. Dies hat zur Folge, daß der Verbrennungsmotor aufgrund der aufzubringenden Kompressionsarbeit ruckartig ein Bremsmoment Mₘ erzeugt.
2. Die momentane Drehzahl nm des Verbrennungsmotors 1 wird gemessen und daraus das von der elektrischen Maschine 3 aufzubringende Drehmoment Mₑₗ ermittelt. Darauffolgend wird der Verbrennungsmotor 1 mit dem Drehmoment Mₑₗ der elektrischen Maschine 3 beaufschlagt, welches im folgendem einem vorgegebenen Verlauf folgt.

Durch die Überlagerung der beiden Drehmomente Mₘ und Mₑₗ wird das Bremsmoment Mₘ langsam eingeleitet und ein ruckartiges Abbremsen des Fahrzeugs verhindert. Auf die entsprechende Weise (hier nicht dargestellt) kann bei einer Deaktivierung der Schubabschaltung ein ruckartiges Wiedereinsetzen der Motorantriebsleistung verhindert werden.

## Patentansprüche

1. Antriebssystem für ein Kraftfahrzeug, mit:
- einem Verbrennungsmotor (1);
- einer Einrichtung (8) zur Schubabschaltung des Verbrennungsmotors (1);
- wenigstens einer elektrischen Maschine (3), die mit dem Verbrennungsmotor (1) gekoppelt ist und dazu eingerichtet ist, beim Aktivieren und Deaktivieren der Schubabschaltung den damit einhergehenden Beschleunigungsruck durch Aufbringen eines Drehmomentes zu vermindern;
- wobei die ruckvermindernde Wirkung der elektrischen Maschine (3) durch ein Aktivierungs- bzw. Deaktivierungssignal der Schubabschaltung gesteuert wird.

2. Antriebssystem nach Anspruch 1, bei welchem die ruckvermindernde Wirkung bei einer Aktivierung der Schubabschaltung aufgrund folgender Bedingung herbeigeführt wird: das Fahrzeug benötigt keine Antriebsleistung und der Verbrennungsmotor (1) weist eine vorbestimmte Mindestdrehzahl auf.

3. Antriebssystem nach Anspruch 1 oder 2, bei welchem die ruckvermindernde Wirkung bei einer Deaktivierung der Schubabschaltung aufgrund folgender Bedingung herbeigeführt wird: die Drehzahl des Verbrennungsmotors (1) sinkt auf einen vorbestimmten Mindestwert ab.

4. Antriebssystem nach einem der Ansprüche 1 bis 3, bei welchem die ruckvermindernde Wirkung bei einer Deaktivierung der Schubabschaltung aufgrund folgender Bedingung herbeigeführt wird: das Fahrzeug benötigt zusätzliche Antriebsleistung.

5. Antriebssystem nach einem der Ansprüche 1 bis 4, bei welchem die ruckvermindernde Wirkung bei einer Aktivierung der Schubabschaltung aufgrund folgender Bedingung herbeigeführt wird: das Fahrzeug erreicht eine vorbestimmte Höchstgeschwindigkeit.

6. Antriebssystem nach einem der Ansprüche 1 bis 5, bei welchem die ruckvermindernde Wirkung bei einer Aktivierung der Schubabschaltung aufgrund folgender Bedingung herbeigeführt wird: der Verbrennungsmotor (1) erreicht eine vorbestimmte Höchstdrehzahl.

7. Antriebssystem nach einem der Ansprüche 1 bis 6, bei welchem die elektrische Maschine (3) koaxial zur Kurbelwelle (2) des Verbrennungsmotors (1) oder zu einer Antriebswelle (2) angeordnet ist und mit dem Verbrennungsmotor (1) mitdreht.

8. Antriebssystem nach Anspruch 7, bei welchem die elektrische Maschine (3) als Starter/Generator ausgebildet ist.

9. Antriebssystem nach Anspruch 7 oder 8, bei welchem die elektrische Maschine (3) als wechselrichter-gesteuerte Drehstrommaschine ausgebildet ist.

10. Antriebssystem nach Anspruch 9, bei welchem die elektrische Maschine (3) von einem Wechselrichter (10) mit Gleichspannungs-Zwischenkreis (10 B) gespeist wird, der ein erhöhtes Spannungsniveau aufweist, wobei ein Energiespeicher (11) auf dem erhöhten Spannungsniveau angeordnet ist und Energie für die Funktion der ruckvermindernden Wirkung zur Verfügung stellt bzw. aufnimmt.

11. Verfahren zum Betreiben eines Antriebssystems für ein Kraftfahrzeug mit Verbrennungsmotor (1), einer Einrichtung (8)zur Schubabschaltung des Verbrennungsmotors (1) und wenigstens einer elektrischen Maschine (3), die mit dem Verbrennungsmotor (1) gekoppelt ist und dazu eingerichtet ist, beim Aktivieren und Deaktivieren der Schubabschaltung den damit einhergehenden Beschleunigungsruck durch Aufbringen eines Drehmomentes zu vermindern, wobei die ruckvermindernde Wirkung der elektrischen Maschine (3) durch ein Aktivierungs- bzw. Deaktivierungssignal der Schubabschaltung gesteuert wird.

12. Verfahren nach Anspruch 11, bei welchem die ruckvermindernde Wirkung bei einer Aktivierung der Schubabschaltung aufgrund folgender Bedingung herbeigeführt wird: das Fahrzeug benötigt keine Antriebsleistung und der Verbrennungsmotor (1) weist eine vorbestimmte Mindestdrehzahl auf.

13. Verfahren nach Anspruch 11 oder 12, bei welchem die ruckvermindernde Wirkung bei einer Deaktivierung der Schubabschaltung aufgrund folgender Bedingung herbeigeführt wird: die Drehzahl des Verbrennungsmotors (1) sinkt auf einen vorbestimmten Mindestwert ab.

14. Verfahren nach einem der Ansprüche 11 bis 13, bei welchem die ruckvermindernde Wirkung bei einer Deaktivierung der Schubabschaltung aufgrund folgender Bedingung herbeigeführt wird: das Fahrzeug benötigt zusätzliche Antriebsleistung.

15. Verfahren nach einem der Ansprüche 11 bis 14, bei welchem die ruckvermindernde Wirkung bei einer Aktivierung der Schubabschaltung aufgrund folgender Bedingung herbeigeführt wird: das Fahrzeug erreicht eine vorbestimmte Höchstgeschwindigkeit.

16. Verfahren nach einem der Ansprüche 11 bis 15, bei welchem die ruckvermindernde Wirkung bei einer Aktivierung der Schubabschaltung aufgrund folgender Bedingung herbeigeführt wird: der Verbrennungsmotor (1) erreicht eine vorbestimmte Höchstdrehzahl.

## Claims

1. A propulsion system for a motor vehicle, having:
- an internal combustion engine (1);
- a device (8) for cutting off the fuel supply to the internal combustion engine (1);
- at least one electric machine (3), which is coupled to the internal combustion engine (1) and is set up so that upon the activation and deactivation of the fuel cut-off device the acceleration-induced jolting that occurs therewith is reduced by applying a torque;
- in which the jolt-reducing action of the electric machine (3) is controlled by a signal for activating or deactivating the fuel cut-off device.

2. A propulsion system according to Claim 1, in which the jolt-reducing action upon the activation of the fuel cut-off device is brought about as a result of the following condition: the vehicle does not require any driving power and the internal combustion engine (1) has a predetermined minimum speed.

3. A propulsion system according to Claim 1 or 2, in which the jolt-reducing action upon the deactivation of the fuel cut-off device is brought about as a result of the following condition: the speed of the internal combustion engine (1) falls to a predetermined minimum value.

4. A propulsion system according to one of Claims 1 to 3, in which the jolt-reducing action upon a deactivation of the fuel cut-off device is brought about as a result of the following condition: the vehicle requires additional driving power.

5. A propulsion system according to one of Claims 1 to 4, in which the jolt-reducing action upon the activation of the fuel cut-off device is brought about as a result of the following condition: the vehicle reaches a predetermined maximum speed.

6. A propulsion system according to one of Claims 1 to 5, in which the jolt-reducing action upon the activation of the fuel cut-off device is brought about as a result of the following condition: the internal combustion engine (1) reaches a predetermined maximum speed.

7. A propulsion system according to one of Claims 1 to 6, in which the electric machine (3) is disposed coaxially to the crankshaft (2) of the internal combustion engine (1) or to a drive shaft (2) and rotates with the internal combustion engine (1).

8. A propulsion system according to Claim 7, in which the electric machine (3) is constructed as a starter motor/generator.

9. A propulsion system according to Claim 7 or 8, in which the electric machine (3) is constructed as an inverter-controlled three-phase machine.

10. A propulsion system according to Claim 9, in which the electric machine (3) is fed by an inverter (10) with an intermediate DC circuit (10 B), which has a higher voltage level, in which an energy storage device (11) at the higher voltage level is disposed and makes available or absorbs energy for the function of the jolt-reducing action.

11. A process for operating a propulsion system for a motor vehicle having an internal combustion engine (1), a device (8) for cutting off the fuel supply to the internal combustion engine (1) and at least one electric machine (3), which is coupled to the internal combustion engine (1) and is set up so that upon the activation and deactivation of the fuel cut-off supply the acceleration-induced jolting that occurs therewith is reduced by applying a torque, in which the jolt-reducing action of the electric machine (3) is controlled by a signal that activates or deactivates the fuel cut-off device.

12. A process according to Claim 11, in which the jolt-reducing action upon the activation of the fuel cut-off device is brought about as a result of the following condition: the vehicle does not require any driving power and the internal combustion engine (1) has a predetermined minimum speed.

13. A process according to Claim 11 or 12, in which the jolt-reducing action upon the deactivation of the fuel cut-off device is brought about as a result of the following condition: the speed of the internal combustion engine (1) drops to a predetermined minimum value.

14. A process according to one of Claims 11 to 13, in which the jolt-reducing action upon the deactivation of the fuel cut-off device is brought about as a result of the following condition: the vehicle requires additional driving power.

15. A process according to one of Claims 11 to 14, in which the jolt-reducing action upon the activation of the fuel cut-off device is brought about as a result of the following condition: the vehicle reaches a predetermined maximum speed.

16. A process according to one of Claims 11 to 15, in which the jolt-reducing action upon the activation of the fuel cut-off device is brought about as a result of the following condition: the internal combustion engine (1) reaches a predetermined maximum speed.

## Revendications

1. Système d'entraînement pour un véhicule automobile comprenant :
- un moteur (1) à combustion interne ;
- un dispositif (8) de coupure d'alimentation en poussée du moteur (1) à combustion interne ;
- au moins une machine électrique (3) qui est couplée au moteur (1) à combustion interne et qui est prévue pour diminuer, par application d'un couple, la secousse d'accélération se produisant lors de l'activation ou de la désactivation de la coupure d'alimentation en poussée ;
- où l'effet de la machine électrique (3), diminuant la secousse, est commandé par un signal d'activation ou de désactivation de la coupure d'alimentation en poussée.

2. Système d'entraînement selon la revendication 1, dans lequel l'effet diminuant la secousse, lors d'une activation de la coupure d'alimentation en poussée, est dû à une condition suivante : le véhicule n'a besoin d'aucune puissance d'entraînement et le moteur (1) à combustion interne tourne à un régime minimum prédéterminé.

3. Système d'entraînement selon la revendication 1 ou 2, dans lequel l'effet diminuant la secousse, lors d'une désactivation de la coupure d'alimentation en poussée, est dû à une condition suivante : le régime du moteur (1) à combustion interne diminue en atteignant une valeur minimale prédéterminée.

4. Système d'entraînement selon l'une quelconque des revendications 1 à 3, dans lequel l'effet diminuant la secousse, lors d'une désactivation de la coupure d'alimentation en poussée, est dû à une condition suivante : le véhicule n'a besoin d'aucune puissance d'entraînement supplémentaire.

5. Système d'entraînement selon l'une quelconque des revendications 1 à 4, dans lequel l'effet diminuant la secousse, lors d'une activation de la coupure d'alimentation en poussée, est dû à une condition suivante : le véhicule atteint une vitesse maximale prédéterminée.

6. Système d'entraînement selon l'une quelconque des revendications 1 à 5, dans lequel l'effet diminuant la secousse, lors d'une activation de la coupure d'alimentation en poussée, est dû à une condition suivante : le moteur (1) à combustion interne atteint un régime maximal prédéterminé.

7. Système d'entraînement selon l'une quelconque des revendications 1 à 6, dans lequel la machine électrique (3) est disposée de façon coaxiale par rapport au vilebrequin (2) du moteur (1) à combustion interne ou par rapport à un arbre d'entraînement (3), et tourne en même temps que le moteur (1) à combustion interne.

8. Système d'entraînement selon la revendication 7, dans lequel la machine électrique (3) est conçue comme un démarreur / alternateur.

9. Système d'entraînement selon la revendication 7 ou 8, dans lequel la machine électrique (3) est conçue comme un alternateur triphasé commandé par un onduleur.

10. Système d'entraînement selon la revendication 9, dans lequel la machine électrique (3) est alimentée par un onduleur (10) à circuit intermédiaire (10 B) à tension continue, lequel circuit intermédiaire comprend un niveau de tension élevé, où un accumulateur d'énergie (11) est disposé sur le niveau de tension élevé, cet accumulateur d'énergie captant de l'énergie ou la fournissant à la fonction de l'effet diminuant la secousse.

11. Procédé de commande d'un système d'entraînement pour un véhicule automobile comprenant un moteur (1) à combustion interne, un dispositif (8) de coupure d'alimentation en poussée du moteur (1) à combustion interne et au moins une machine électrique (3) qui est couplée au moteur (1) à combustion interne et qui est prévue pour diminuer, par application d'un couple, la secousse d'accélération se produisant lors de l'activation ou de la désactivation de la coupure d'alimentation en poussée, où l'effet de la machine électrique (3), diminuant la secousse, est commandé par un signal d'activation ou de désactivation de la coupure d'alimentation en poussée.

12. Procédé selon la revendication 11, dans lequel l'effet diminuant la secousse, lors d'une activation de la coupure d'alimentation en poussée, est dû à une condition suivante : le véhicule n'a besoin d'aucune puissance d'entraînement et le moteur (1) à combustion interne tourne à un régime minimum prédéterminé.

13. Procédé selon la revendication 11 ou 12, dans lequel l'effet diminuant la secousse, lors d'une désactivation de la coupure d'alimentation en poussée, est dû à une condition suivante : le régime du moteur (1) à combustion interne diminue en atteignant une valeur minimale prédéterminée.

14. Procédé selon l'une quelconque des revendications 11 à 13, dans lequel l'effet diminuant la secousse, lors d'une désactivation de la coupure d'alimentation en poussée, est dû à une condition suivante : le véhicule n'a besoin d'aucune puissance d'entraînement supplémentaire.

15. Procédé selon l'une quelconque des revendications 11 à 14, dans lequel l'effet diminuant la secousse, lors d'une activation de la coupure d'alimentation en poussée, est dû à une condition suivante : le véhicule atteint une vitesse maximale prédéterminée.

16. Procédé selon l'une quelconque des revendications 11 à 15, dans lequel l'effet diminuant la secousse, lors d'une activation de la coupure d'alimentation en poussée, est dû à une condition suivante : le moteur (1) à combustion interne atteint un régime maximal prédéterminé.
